# EUROPÄISCHE PATENTSCHRIFT

(11) **EP 2 748 043 B1**
(45) Veröffentlichungstag und Bekanntmachung des Hinweises auf die Patenterteilung: **22.07.2015**
(21) Anmeldenummer: 12748025.9
(22) Anmeldetag: 14.08.2012
(51) Int. Cl.: B60T 17/00, B01D 53/04, F16L 55/033

(54) **SCHALLDÄMPFUNGSEINRICHTUNG FÜR EINE LUFTTROCKNUNGSANLAGE EINES DRUCKLUFTVERSORGUNGSSYSTEMS**
SILENCER FOR AN AIR DRYER IN AN AIR SUPPLY SYSTEM
SILENCIEUX POUR DEHUMIDIFIEUR DANS UN SYSTEME PNEUMATIQUE

(30) Priorität: 25.08.2011 DE 102011111625
(43) Veröffentlichungstag der Anmeldung: 02.07.2014
(73) Patentinhaber: KNORR-BREMSE Systeme für Schienenfahrzeuge GmbH, 80809 München (DE)
(72) Erfinder: HARTL, Michael, 82008 Unterhaching (DE); FRITZ, Matthias, 99091 Erfurt (DE); ACHATZ, Christian, 85356 Freising (DE)
(86) Internationale Anmeldenummer: PCT/EP2012/065854
(87) Internationale Veröffentlichungsnummer: WO 2013/026736

(56) Entgegenhaltungen:
- EP-A1- 0 379 160
- DE-C1- 19 701 361
- FR-A1- 2 455 168
- FR-A1- 2 544 794

## Beschreibung

Die Erfindung betrifft eine Schalldämpfungseinrichtung für eine Lufttrocknungsanlage eines Druckluftversorgungsystems mit einem Schalldämpfergehäuse, an dem eine Einlassöffnung zur Zuführung von aus der Lufttrocknungsanlage abzulassender kondensathaltiger Druckluft sowie einer Auslassöffnung zur Abführung der Druckluft nach außen angeordnet ist.

Das Einsatzgebiet der Erfindung erstreckt sich vornehmlich auf Schienenfahrzeuge, deren Druckluftversorgungssystem in erster Linie für die Bereitstellung eines Bremsdrucks für die Fahrzeugbremsen dient. Um eine möglichst trockene Bremsluft zu erzeugen umfasst das kompressorbetriebene Druckluftversorgungssystem zur Luftaufbereitung eine Lufttrocknungsanlage, welche der von außen angesaugten und verdichteten Druckluft die hierin enthaltene Feuchtigkeit entzieht. Hierfür werden im Schienenfahrzeugbau vornehmlich Ein- und Zweikammerlufttrockner eingesetzt, welche der Druckluft die Feuchtigkeit entziehen und diese in Form von kondensathaltiger Druckluft nach außen hin abführen.

Aus der DE 34 45 699 A1 geht ein Einkammerlufttrockner hervor, welcher für im Intervallbetrieb aufladbare Druckluftversorgungssysteme vorgesehen ist und eine einzige regenerierbare Trocknungspatrone und einen die herrschende Luftfeuchtigkeit im Luftvorratsvolumen messenden Feuchtigkeitssensor aufweist. Eine Auswerteelektronik veranlasst während der Leerlaufphase des Kompressors und einen definierten Schwellwert übersteigender Luftfeuchtigkeit im Luftvorratsbehälter ein Regenerieren der Trocknungspatrone. Während des Regenerierungsbetriebs wird die Druckluft derart rückwärts durch die Trocknungspatrone geleitet, dass die hieraus austretende kondensathaltige Druckluft an ein Ablassventil zur Abführung nach außen gelangt. Das Ablassventil ist mit einem ungefassten Abluftanschluss versehen, so dass die kondensathaltige Druckluft mit einem lauten Abströmgeräusch nach außen hin freigesetzt wird. Diesem Abströmgeräusch geht in Folge der Umschaltung in den Regenerierungsbetrieb ein Druckluftstoß voraus, welcher enorme Schallpegel erreichen kann. Dies führt insbesondere bei Schienenfahrzeugen, welche in Bahnhöfen nahe von Wohngebieten abgestellt werden, zu Lärmbelästigungen, insbesondere dann, wenn die Schienenfahrzeuge über Nacht in Bereitschaft gehalten werden sollen. DE 19 701 361 C1 vom Anmelder beschreibt einen Geräuschdämpfer mit einen Gehäusetopf in dem ein Schallschluckendesmaterial befindet.

Aus DE 35 33 893 A1 geht ein Zweikammerlufttrockner eines Druckluftversorgungssystems für Schienenfahrzeuge hervor, welcher über zwei Trocknungsbehälter verfügt, die abwechselnd betreibbar sind, um eine kontinuierliche Druckluftversorgung zu gewährleisten. Während in dem einen Trocknungsbehälter der vom Kompressor erzeugte Druckluftstrom getrocknet wird, wird das Trockenmittel des anderen Trocknungsbehälters regeneriert. Durch ein an die beiden Trocknungsbehälter angeschlossenes Schaltventil wird in einer zeitlich vorbestimmbaren Wechselfolge zu trocknende Druckluft in einem der Trocknungsbehälter eingeleitet und jeweils bei der Regeneration im anderen Trocknungsbehälter verwendete Luft von diesem abgeleitet. Das Schaltventil besitzt des Weiteren eine Auslassöffnung zur Abführung kondensathaltiger Druckluft, die während der Regenerierung des sich im Regenerierungsbetrieb befindlichen Trocknungsbehälters anfällt. Auch aus dieser Auslassöffnung gelangt ungefasste Abluft nach außen.

Es ist bereits versucht worden, die Auslassöffnungen bekannter Lufttrocknungsanlage für Schienenfahrzeuge mit einem Schalldämpfer zu versehen, der in der Regel als Sintermetall- oder Kunststoffteil oder ein aus mit Dämmmaterial befülltes Behältnis ausgeführt ist. Derartige Lösungen sind jedoch recht großbauend und bewirken nur eine begrenzte Schalldämpfung.

Ferner weisen bekannte Schalldämpfer des Standes der Technik den Nachteil auf, dass das in der Druckluft enthaltene Kondensat im Schalldämpfer einfriert und hierdurch den Austritt der Druckluft nach außen blockieren kann.

Es ist daher die Aufgabe der vorliegenden Erfindung, eine Schalldämpfungseinrichtung für eine Lufttrocknungsanlage eines Druckluftversorgungssystems, insbesondere für Schienenfahrzeuge, zu schaffen, welche beim Einsetzen eines Regenerierungsbetriebs für einen Trocknungsbehälter und dem Ausstoß von kondensathaltiger Druckluft eine hohe Schalldämpfung mit einfachen und kleinbauenden technischen Mitteln bewirkt, wobei auch das Kondensat aus der Druckluft sicher nach außen abgeleitet wird.

Die Aufgabe wird ausgehend von einer Schalldämpfungseinrichtung gemäß dem Oberbegriff von Anspruch 1 in Verbindung mit dessen kennzeichnenden Merkmal gelöst. Die nachfolgenden abhängigen Ansprüche geben vorteilhafte Weiterbildungen der Erfindung wieder.

Die Erfindung schließt die technische Lehre ein, dass eine Einlassöffnung des Schalldämpfergehäuses in mindestens eine interne Vorkammer einmündet, welche in mehrere parallel gestaltete Nachkammern einmündet, die um einen zentral im Schalldämpfergehäuse angeordneten Heizstab herum angeordnet sind. Um einen hohen Wirkungsgrad der Heizung sicherzustellen, sollten der Heizstab und die Nachkammer vorzugsweise mit ein und demselben Gehäuseteil in Kontakt stehen.

Der Vorteil der erfindungsgemäßen Lösung liegt insbesondere darin, dass die einfriergefährdeten Nachkammern aktiv beheizt werden, so dass ein Einfrieren von sich hierin ansammelnden und nach außen abzuführenden Kondensats vermieden werden kann. Da der Schalldämpfer auf einer speziellen Kammertechnik basiert, wird ein ungehindertes Hindurchfließen von Kondensat durch die in erster Linie der Schalldämpfung dienenden Vor- und Nachkammern ermöglicht. Durch die erfindungsgemäße Kammeranordnung kann das Schalldämpfergehäuse recht kleinbauend ausgeführt werden, so dass wenig Platzbedarf am Einbauort der Lufttrocknungsanlage hierfür erforderlich ist.

Gemäß einer bevorzugten Ausführungsform wird vorgeschlagen, dass die Nachkammern jeweils zylinderförmig ausgebildet sind und unter Bildung von Gehäusezwischenstegen äquidistant zueinander sowie entlang einer Kreislinie um den koaxial im Schalldämpfergehäuse hierzu angeordneten Heizstab platziert sind. Die Gehäusezwischenstege drosseln den Wärmeübergang nach außen und bewirken, dass nur wenig Wärmeenergie des Heizstabes ungenutzt nach außen hin abgeführt wird, also die Heizenergie des Heizstabes im Inneren des Schalldämpfergehäuses konzentriert bleibt. Dies führt dazu, dass es zwar unter ungünstigen Bedingungen zu Vereisungen im Außenbereich einer Nachkammer kommen könnte, die inneren Bereiche der Nachkammern jedoch aufgrund der erhöhten Bauteiltemperatur eisfrei bleiben. Versuche haben ergeben, dass diese optimale Nutzung der Heizenergie eintritt, wenn die Gehäusezwischenstege weniger als 40% der Kreislinie belegen, die in dem dünnsten Bereich der Gehäusezwischenstege gelegt ist.

Gemäß einer anderen die Erfindung verbessernden Maßnahme wird vorgeschlagen, dass die Anzahl der Vorkammern und die Anzahl der Nachkammern mindestens im Verhältnis von 1:2 stehen. Es sollen also zumindest doppelt so viele Nachkammern wie Vorkammern vorhanden sein, um einen wirkungsvollen Schalldämpfungseffekt zu erzielen.

Eine demselben Vorteil dienende Maßnahme besteht darin, dass die mindestens eine Vorkammer in Abhängigkeit der Förderleistung P_{F} als ein freies Resonanzvolumen V nach Maßgabe der mathematischen Formel V = 0,8 x P_{F} +/-60% ausgeführt ist. Hierbei wird das Resonanzvolumen V in cm³ und die Förderleistung in l/min bemessen. Dank des so geschaffenen freien Resonanzvolumens in der gegenüber den Nachkammern vorzugsweise größer ausgebildeten Vorkammer lässt sich bereits durch die Vorkammer eine hohe Schalldämpfung erzielen.

Alternativ hierzu kann das Volumen der Vorkammer auch mit einem Dämmstoff oder einen Sintermaterial befüllt oder teilbefüllt werden. Vorzugsweise sollten die Nachkammern nur teilweise mit einem Schalldämmmaterial befüllt werden, so dass innerhalb der Nachkammern ein Vorraum entsteht. Dieser Vorraum ist besonders vorteilhaft, wenn sich das mit Schalldämmmaterial befüllte Volumen zum Volumen des Vorraums im Verhältnis von 2,7:1 bis 1,3:1 bewegt. In einer besonders bevorzugten Ausführungsform verfügt die erfindungsgemäße Schalldämpfungseinrichtung über insgesamt vier Nachkammern. Das Schalldämmmaterial im befüllten Volumen der Vorkammer ist vorzugsweise ein Geflecht aus Kunststoff, vorzugsweise Polyethylen. Alternativ hierzu sind auch andere Materialien denkbar wie PTFE oder Sinterbronze.

Nach einer anderen bevorzugten Ausführungsform der Erfindung kann die Vorkammer auch mit mehreren zueinander beabstandeten Trennplatten mit je mindestens einem Durchbruch ausgestattet werden. Die Druchbrüche liegen vorzugsweise gegenüberliegend zueinander, so dass ein Druckstoß eine große Wellenlänge zurücklegen muss. Der Abstand der einzelnen Trennplatten zueinander kann gleichmäßig sein. Es ist jedoch auch ein unterschiedlicher, ein zunehmender oder abnehmender Plattenabstand denkbar, wodurch unterschiedliche Frequenzanteile eines Druckstoßes gezielt gedämpft werden können.

In einer weiteren vorteilhaften Ausführung ist das Dämmmaterial in den Nachkammern ein Kunststoffgeflecht, bestehend aus einem gerollten Streifen, dessen Länge so ausgelegt ist, dass die Rolle gerade noch in den zur Verfügung stehenden Umfang der zylindrischen Nachkammer passt. Hierdurch lässt auf einfache Weise eine wirkungsvolle Befüllung der zylindrischen Nachkammer mit Schalldämmmaterial erzielen.

Die Nachkammern der Schalldämpfungseinrichtung sollten im unteren Teil eines Kondensatabscheiders der Schalldämpfungseinrichtung integriert oder angebaut und nahe an dem Heizstab angebracht sein. Daneben ist auch eine gespiegelte Anordnung denkbar.

Weiterhin wird vorgeschlagen, dass die Nachkammem über je zugeordnete Drosselstellen mit der zugeordneten - vorzugsweise darüber liegenden - Vorkammer in Verbindung stehen. Um eine möglichst hohe Schalldämmung zu erreichen, sollte der Durchmesser dieser Drosselstellen gegenüber dem Durchmesser der Nachkammer in einem Verhältnis von 1:2 bis 1:5 stehen.

Weiterhin wird vorgeschlagen, dass die Summe der Volumen der Nachkammern bezüglich des Volumen einer einzigen Vorkammer in einem Volumenverhältnis von 1:6 bis 1:10 steht, um eine hohe Schalldämmung zu bewirken.

Gemäß einer anderen die Erfindung verbessernden Maßnahme wird vorgeschlagen, dass der Heizstab mit einem integrierten Thermostatelement ausgeführt ist, welches ein Zu- und Abschalten des Heizstabes in Abhängigkeit zur Bauteiltemperatur steuert. Diese Steuerung kann dank des Thermostatelements also automatisch ohne eine Einflussnahme von außen realisiert werden. Der Heizstab sollte entlang des gesamten vorzugsweise zylinderförmigen Schalldämpfergehäuses verlaufen, um eine hohe Heizwirkung zu entfalten. Das Schalldämpfergehäuse mit dem hierin integrierten Vor- und Nachkammern besteht vorzugsweise aus einer Aluminiumlegierung, um eine möglichst hohe thermische Leitfähigkeit zu bewirken. Gemäß einer die thermischen Eigenschaften der Schalldämpfungseinrichtung verbessernden Maßnahme wird vorgeschlagen, dass das Schalldämpfergehäuse in einem thermischen Isolierband eingeschlossen ist. Dies bietet den Vorteil, dass die Heizleistung des Heizstabes im Schalldämpfergehäuse konzentriert bleibt und nicht ein zu großer Anteil über die Oberfläche des Schalldämpfergehäuses nach außen abgestrahlt wird. Hierdurch bleiben selbst bei kritischen Minustemperaturen an den Stellen, an denen Kondensat aus dem Schalldämpfergehäuse abgeleitet wird, positive Bauteiltemperaturen erhalten.

Ferner wird vorgeschlagen, dass zwischen dem Lufteinlass in das Schalldämpfergehäuse und dem Luftauslass eine Umlenkung des Druckluftstroms in einem rechten Winkel erfolgt, was durch die Anordnung der äußeren Anschlüsse sowie der Druckluftführung durch die Vor- und Nachkammern realisierbar ist. Diese Maßnahme verbessert den Wirkungsgrad der Schalldämpfung.

Gemäß einer anderen die Erfindung verbessernden Maßnahme ist eine Entlüftung eines in der Steuerung integrierten Magnetventils über eine separate Rohrleitung in das Schalldämpfergehäuse zur Schalldämpfung des Abströmgeräuschs des Magnetventils geführt. Denn die Steuerung verfügt über ein Magnetventil zum Umschalten der Betriebsphasen der Lufttrocknungsanlage, dessen Luftverbrauch vom Gehäuse der Steuerung abgeblasen wird. Das Abblasen der Steuerluft führt zu einem zusätzlichen Pfeifen, das sich ebenfalls über die erfindungsgemäße Schalldämpfungseinrichtung eliminieren lässt.

Weitere die Erfindung verbessernde Maßnahmen werden nachstehend gemeinsam mit der Beschreibung eines bevorzugten Ausführungsbeispiels anhand der Figuren näher dargestellt. Es zeigt:
- Figur 1: eine perspektive Ansicht einer Lufttrocknungsanlage für ein Druckluftversorgungssystem mit hieran angeordneten Schalldämpfungseinrichtung,
- Figur 2: eine perspektive Explosionsdarstellung einer Schalldämpfungseinrichtung in einer ersten Ausführungsform,
- Figur 3: einen Längsschnitt durch die Schalldämpfungseinrichtung gemäß Figur 2 im zusammengebauten Zustand,
- Figur 4: einen Längsschnitt durch eine andere Ausführungsform einer Schalldämpfungseinrichtung mit modifizierter Vorkammer, und
- Figur 5: einen Querschnitt im Schnitt A-A der Schalldämpfungseinrichtung gemäß Figur 4.

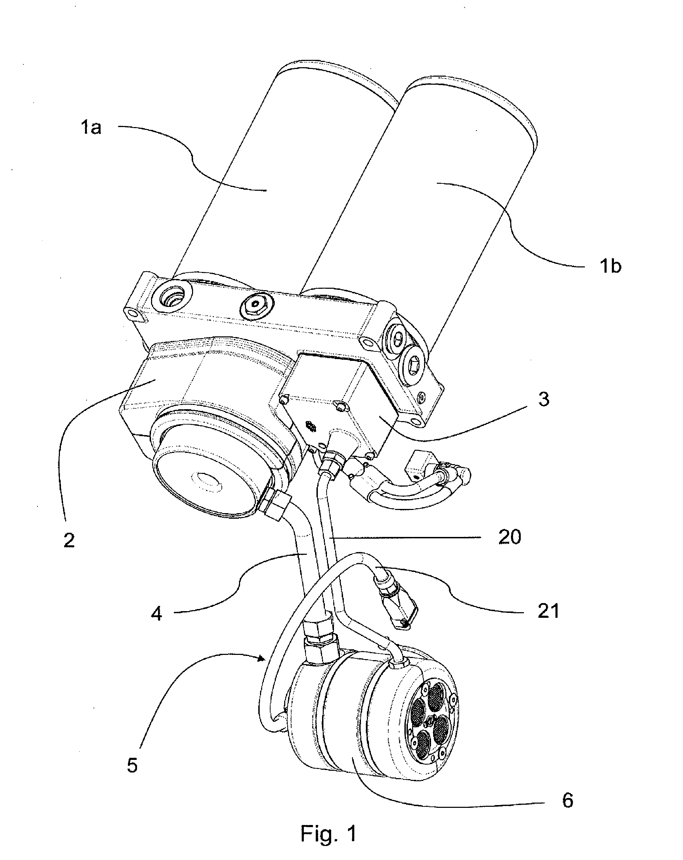

Nach Figur 1 besteht eine Zweikammer-Lufttrocknungsanlage aus zwei Trocknungsbehältern 1a und 1b, welche in zwei Phasen, nämlich einer Trocknungs- und einer Regenerierungsphase, abwechselnd arbeiten, um eine Trocknung eines kontinuierlichen durchgeleiteten feuchten Druckluftstrom zu gewährleisten.

Während in dem einen Trocknungsbehälter 1a der Hauptluftstrom getrocknet wird, wird das Trockenmittel des anderen Trocknungsbehälters 1b durch Rückwärtsbetrieb regeneriert. Diese Phasen werden über ein Schaltventil 2 nach Maßgabe einer elektronischen Steuerung 3 durchgeführt. Auslassseitig des Schaltventils 2 ist über eine Rohrleitung 4 eine Schalldämpfungseinrichtung angeschlossen. Hierzu ist die Rohrleitung 4 an einer Einlassöffnung 5 am Schalldämpfergehäuse angekoppelt. Die Einlassöffnung 5 dient der Zuführung von aus der Lufttrocknungsanlage abzulassender kondensathaltiger Druckluft. Die Schalldämpfungseinrichtung dient dazu, dass Abströmgeräusch akustisch zu dämpfen und gleichzeitig das in der Druckluft enthaltene Kondensat sicher nach außen hin abzuführen, und zwar über vier Auslassöffnungen 7, die am Boden des Schalldämpfergehäuses 6 angeordnet sind. Ferner geht von der elektronischen Steuerung 3 ein Elektrokabel 8 zum Schalldämpfergehäuse 6, über welches elektrische Energie zum Betrieb eines im Schalldämpfergehäuse 6 angeordneten - hier nicht weiter dargestellt - Heizstabs geliefert wird.

Die Auslassöffnungen 7 sind rechtwinkelig versetzt zu der durch die Einlassöffnung vorgegebenen Einströmrichtung angeordnet, um die das Schalldämpfergehäuse 6 durchströmende Druckluft umzulenken.

Weiterhin ist eine Entlüftung eines in der Steuerung 3 integrierten Magnetventils über eine separate Rohrleitung 20 in das Schalldämpfergehäuse 6 zur Schalldämpfung des Abströmgeräuschs des Magnetventils geführt. Außerdem wird ein - hier ebenfalls nicht erkennbarer-Heizstab über eine Elektroleitung 21 mit elektrischer Energie zum Beheizen des Schalldämpfergehäuses 6 versorgt.

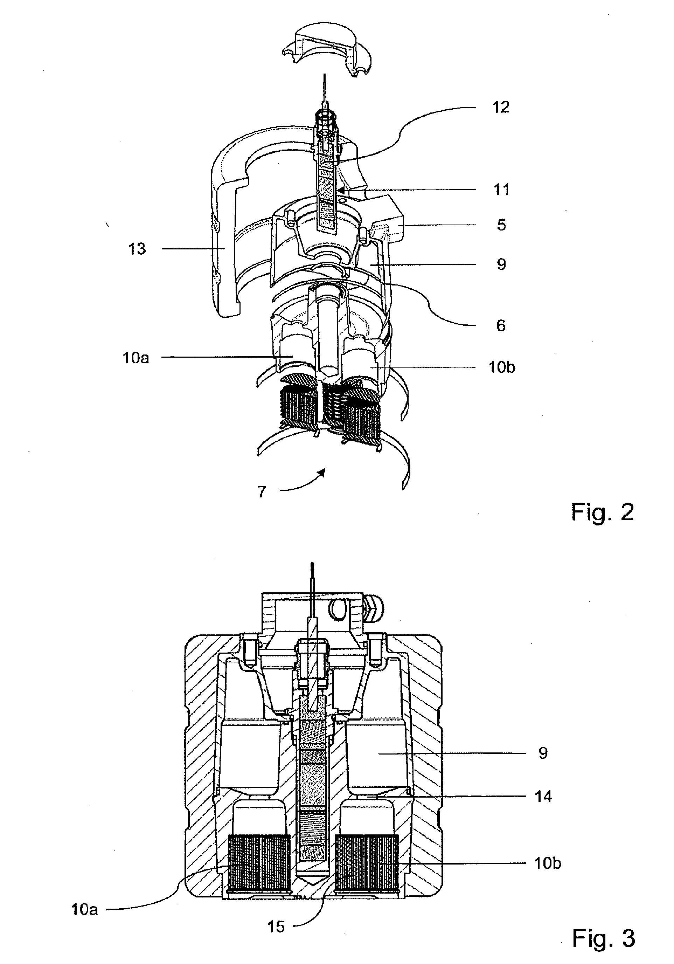

Gemäß Figur 2 gelangt die über die Einlassöffnung 5 zugeführte kondensathaltige Druckluft in eine im Schalldämpfergehäuse 6 integrierte Vorkammer 9, welche bodenseitig in vier zueinander parallel geschaltete Nachkammern 10a, 10b - von denen hier nur zwei Nachkammern ersichtlich sind - einmünden. Die vier Nachkammer 10a bis 10d bilden bodenseitig jeweils eine Öffnung nach außen, welche die Auslassöffnung 7 des Schalldämpfergehäuses 6 darstellt. Die vier Nachkammem 10a - 10d sind um einen zentral im Schalldämpfergehäuse 6 angeordneten Heizstab 7 herum positioniert. Der Heizstab 7 dient der Zuführung von Wärmeenergie, um ein Einfrieren des Kondensats im Schalldämpfergehäuse 6 zu verhindern. Der Heizstab 11 ist mit einem integrierten Thermostatelement 12 versehen, das Ein- und Abschalten des Heizstabes 11 in Abhängigkeit zur Bauteiltemperatur automatisch steuert.

Damit die durch den Heizstab 11 erzeugte Wärmeenergie nicht ungenutzt nach außen gelangt, ist das Schalldämpfergehäuse 6 mit einem zweischaligen thermischen Isoliermantel 13 umhüllt, der aus einem Isolierwerkstoff besteht.

Gemäß Figur 2 sind die ersichtlichen Nachkammern 10a und 10b über die zugeordneten Drosselstellen 14 (exemplarisch) mit der zugeordneten großvolumigen Vorkammer 9 gekoppelt. Durch die Drosselstellen 9 wird ein hoher Schalldämpfungseffekt der Schalldämpfungseinrichtung bewirkt. Die Nachkammern 10a, 10b sind bei dieser Ausführungsform teilweise mit einem Schalldämmmaterial 15 befüllt, das in Form eines spiralförmig gewickelten Netzgewebes aus Kunststoff ausgebildet ist.

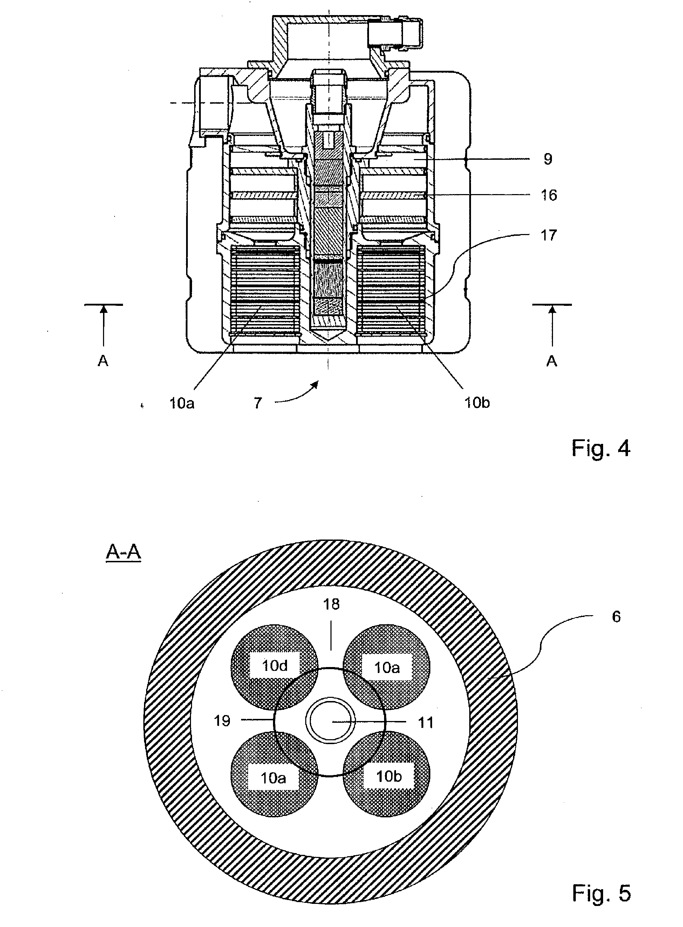

Gemäß der anderen in Figur 4 dargestellten Ausführungsform der erfindungsgemäßen Lösung sind in der Vorkammer 9 mehreren zueinander beabstandete Trennplatten 16 mit je zumindest einem Durchbruch angeordnet, um einen weiteren Schalldämpfungseffekt zu erzielen. Die Trennplatten 16 sind hier gleich beabstandet zueinander angeordnet. Bei dieser Ausführungsform sind auch die Nachkammern 10a und 10b mit mehreren quer verlaufenden Siebplatten 17 zur Schalldämpfung befüllt.

Wie aus dem in der Figur 5 dargestellten Querschnitt durch das Schalldämpfergehäuse 6 auf Höhe der Nachkammern 10a bis 10d hervorgeht, sind diese jeweils zylinderförmig ausgebildet und unter Bildung von Gehäusezwischenstegen 18 äquidistant zueinander angeordnet. Weiterhin sind die Nachkammern 10a bis 10d entlang einer Kreislinie 19 koaxial im Schalldämpfergehäuse 6 und dem hierin zentral angeordneten Heizstab 11 herum angeordnet. Die Gehäusezwischenstege 18 nehmen der Länge nach weniger als 40 % des Umfangs der Kreislinie 19 ein, welche in den dünnsten Bereich der Gehäusezwischenstege 18 gelegt ist. Hierdurch wird eine unerwünschte Wärmeabfuhr nach außen bei gleichzeitig hinreichender Bauteilstabilität minimiert.

Die Erfindung ist nicht beschränkt auf die beiden vorstehend beschriebenen Ausführungsbeispiele. Es sind vielmehr auch Änderungen denkbar, die vom Schuzbereich der nachfolgenden Ansprüche mit umfasst sind. So ist es beispielsweise auch möglich, dass die hier beschriebene Schalldämpfungseinrichtung auch bei Einkammerlufttrocknern zur Anwendung kommt.

### Bezugszeichenliste

- 1: Trocknungsbehälter
- 2: Schaltventil
- 3: Steuerung
- 4: Rohrleitung
- 5: Einlassöffnung
- 6: Schalldämpfergehäuse
- 7: Auslassöffnung
- 8: Elektrokabel
- 9: Vorkammer
- 10: Nachkammer
- 11: Heizstab
- 12: Thermostatelement
- 13: Isoliermantel
- 14: Drosselstelle
- 15: Schalldämmmaterial
- 16: Trennplatten
- 17: Siebplatten
- 18: Gehäusezwischenstege
- 19: Kreislinie
- 20: Rohrleitung
- 21: Elektroleitung

## Patentansprüche

1. Schalldämpfungseinrichtung für eine Lufttrocknungsanlage eines Druckluftversorgungssystems mit einem Schalldämpfergehäuse (6), an dem eine Einlassöffnung (5) zur Zuführung von aus der Lufttrocknungsanlage abzulassender kondensathaltiger Druckluft sowie mindestens eine Auslassöffnung (7) zur Abführung der kondensathaltigen Druckluft nach außen angeordnet ist,
**dadurch gekennzeichnet, dass** die Einlassöffnung (5) in mindestens eine Vorkammer (9) des Schalldämpfergehäuses (6) einmündet, welche in mehrere parallel geschaltete Nachkammern (10a-10d) einmündet, die um einen zentral im Schalldämpfergehäuse (6) angeordneten Heizstab (11) herum angeordnet sind.

2. Schalldämpfungseinrichtung nach Anspruch 1,
**dadurch gekennzeichnet, dass** die Nachkammern (10a - 10d) jeweils zylinderförmig ausgebildet sind und unter Bildung von Gehäusezwischenstegen (18) äquidistant zueinander sowie entlang einer Kreislinie (19) um den koaxial im Schalldämpfergehäuse (6) hierzu angeordneten Heizstab (11) angeordnet sind.

3. Schalldämpfungseinrichtung nach Anspruch 1,
**dadurch gekennzeichnet, dass** die Anzahl der Vorkammern (9) und die Anzahl der Nachkammern (10a - 10d) mindestens im Verhältnis von 1:2 stehen.

4. Schalldämpfungseinrichtung nach Anspruch 2,
**dadurch gekennzeichnet, dass** die Gehäusezwischenstege (18) weniger als 40% der Kreislinie (19) belegen, die in den dünnsten Bereich der Gehäusezwischenstege (18) gelegt ist.

5. Schalldämpfungseinrichtung nach Anspruch 1,
**dadurch gekennzeichnet, dass** die mindestens eine Vorkammer (9) in Abhängigkeit von der Förderleistung (P_{F}) als ein freies Resonanzvolumen (V) nach Maßgabe der Formel V = 0,8 x P_{F} +/-60% ausgeführt ist.

6. Schalldämpfungseinrichtung nach Anspruch 1,
**dadurch gekennzeichnet, dass** die mindestens eine Vorkammer (9) zumindest teilweise mit einem Schalldämmstoff oder einem Sintermaterial befüllt ist.

7. Schalldämpfungseinrichtung nach Anspruch 1,
**dadurch gekennzeichnet, dass** in der mindestens einen Vorkammer (9) mehrere zueinander beabstandete Trennplatten (16) mit je mindestens einem Durchbruch angeordnet sind.

8. Schalldämpfungseinrichtung nach Anspruch 1,
**dadurch gekennzeichnet, dass** die Summe der Volumen der Nachkammern (10a - 10d) bezüglich des Volumens einer einzigen Vorkammer (9) in einem Volumenverhältnis von 1:6 bis 1:10 steht.

9. Schalldämpfungseinrichtung nach Anspruch 1,
**dadurch gekennzeichnet, dass** die Nachkammern (10a - 10d) über je zugeordnete Drosselstellen (14) mit der zugeordneten Vorkammer (9) in Verbindung stehen.

10. Schalldämpfungseinrichtung nach einem der vorstehenden Ansprüche,
**dadurch gekennzeichnet, dass** eine Entlüftung eines in der Steuerung (3) integrierten Magnetventils über eine Rohrleitung (20) in die mindestens eine Vorkammer (9) oder eine der Nachkammern (10a - 10d) im Schalldämpfergehäuse (6) geführt ist.

11. Schalldämpfungseinrichtung nach einem der vorstehenden Ansprüche,
**dadurch gekennzeichnet, dass** das Schalldämpfergehäuse (6) in einem thermischen Isoliermantel (13) eingeschlossen ist.

12. Schalldämpfungseinrichtung nach einem der vorstehenden Ansprüche,
**dadurch gekennzeichnet, dass** die Auslassöffnung (7) rechtwinklig versetzt zur durch die Einlassöffnung (5) vorgegebenen Einströmrichtung der Druckluft in das Schalldämpfergehäuse (6) angeordnet ist, um die das Schalldämpfergehäuse (6) durchströmende Druckluft umzulenken.

## Claims

1. Silencer device for an air drying system of a compressed-air supply system, comprising a silencer housing (6), on which is arranged an inlet opening (5) for the supply of condensate-laden compressed air to be discharged from the air drying system and at least one outlet opening (7) for the discharge of the condensate-laden compressed air to the outside,
**characterised in that** the inlet opening (5) terminates into at least one pre-chamber (9) of the silencer housing (6), which pre-chamber terminates into a plurality of post-chambers (10a-10c), which are connected in parallel and are arranged around a heating element (11) arranged centrally in the silencer housing (6).

2. Silencer device according to claim 1,
**characterised in that** the post-chambers (10a-10d) are each of cylindrical design and are arranged equidistantly from one another and along a circle (19) around the heating element (11), which is arranged coaxially thereto in the silencer housing (6), thereby forming intermediate housing webs (18).

3. Silencer device according to claim 1,
**characterised in that** the number of pre-chambers (9) and the number of post-chambers (10a-10d) are in a ratio of at least 1:2.

4. Silencer device according to claim 2,
**characterised in that** the intermediate housing webs (18) occupy less than 40% of the circle (19), which is situated in the thinnest region of the intermediate housing webs (18).

5. Silencer device according to claim 1,
**characterised in that** the at least one pre-chamber (9) is embodied as a free resonance volume (V) according to the formula V = 0.8 x P_{F} +/- 60%, depending on the delivery rate (P_{F}).

6. Silencer device according to claim 1,
**characterised in that** the at least one pre-chamber (9) is at least partially filled with a sound-insulating material or a sintered material.

7. Silencer device according to claim 1,
**characterised in that** a plurality of mutually spaced dividing plates (16), each with at least one aperture, is arranged in the at least one pre-chamber (9).

8. Silencer device according to claim 1,
**characterised in that** the sum of the volumes of the post-chambers (10a-10c) is in a volume ratio of 1:6 to 1:10 to the volume of a single pre-chamber (9).

9. Silencer device according to claim 1,
**characterised in that** the post-chambers (10a-10d) are connected by respectively associated restrictors (14) to the associated pre-chamber (9).

10. Silencer device according to any of the preceding claims,
**characterised in that** a vent from a solenoid valve integrated into the controller (3) is routed via a pipe (20) into the at least one pre-chamber (9) or one of the post-chambers (10a-10d) in the silencer housing (6).

11. Silencer device according to any of the preceding claims,
**characterised in that** the silencer housing (6) is enclosed in a thermal insulating jacket (13).

12. Silencer device according to any of the preceding claims,
**characterised in that** the outlet opening (7) is arranged offset at right angles to the inflow direction of the compressed air into the silencer housing (6), said direction being determined by the inlet opening (5), in order to deflect the compressed air flowing through the silencer housing (6).

## Revendications

1. Silencieux pour un déshumidificateur d'un système d'alimentation en air comprimé, comprenant une enveloppe (6) de silencieux, sur laquelle est ménagée une ouverture (5) d'entrée pour l'apport d'air comprimé contenant des produits condensés et sortant du déshumidificateur, ainsi qu'au moins une ouverture (7) de sortie pour l'évacuation vers l'extérieur de l'air comprimé contenant des produits condensés,
**caractérisé en ce que** l'ouverture (5) d'entrée débouche dans ou moins une chambre (9) antérieure de l'enveloppe (6) du silencieux, chambre qui débouche dans plusieurs chambres (10a à 10d) postérieures qui sont montées en parallèle et qui sont disposées autour d'un barreau (11) chauffant disposé centralement dans l'enveloppe (6) du silencieux.

2. Silencieux suivant la revendication 1,
**caractérisé en ce que** les chambres (10a à 10d) postérieures sont constituées respectivement sous forme de cylindre et sont disposées, avec formation d'entretoises (18) d'enveloppe, de manière équidistante les unes par rapport aux autres, ainsi que le long d'une ligne (19) circulaire autour du barreau (11) chauffant disposé à cet effet coaxialement dans l'enveloppe (6) du silencieux.

3. Silencieux suivant la revendication 1,
**caractérisé en ce que**, le nombre des chambres (9) antérieures et le nombre des chambres (10a à 10d) postérieures est au moins dans le rapport de 1 :2.

4. Silencieux suivant la revendication 1,
**caractérisé en ce que**, les entretoises (18) de l'enveloppe occupe moins de 40 % de la ligne (19) circulaire qui est mise dans la partie la plus mince des entretoises (18) de l'enveloppe.

5. Silencieux suivant la revendication 1,
**caractérisé en ce que** la au moins une chambre (9) antérieure est réalisée en fonction de la puissance (P_{F}) sous la forme d'un volume (V) de libre de résonance suivant la formule V = 0,8 x P_{F} +/-60%

6. Silencieux suivant la revendication 1,
**caractérisé en ce que**, la au moins une chambre (9) antérieure est remplie au moins en partie d'une substance amortissant les sons ou d'une matière frittée.

7. Silencieux suivant la revendication 1,
**caractérisé en ce que** plusieurs plaques (16) de séparation à distance les unes des autres ayant respectivement au moins une traversée sont disposées dans au moins une chambre (9) antérieure.

8. Silencieux suivant la revendication 1,
**caractérisé en ce que** la somme des volumes des chambres (10a à 10d) postérieures par rapport au volume d'une chambre (9) antérieure unique est dans un rapport en volume de 1 :6 à 1 :10.

9. Silencieux suivant la revendication 1,
**caractérisé en ce que** les chambres (10a à 10d) postérieures sont en liaison avec la chambre (9) antérieure associée par respectivement des points (14) d'étranglement associés.

10. Silencieux suivant l'une des revendications précédentes,
**caractérisé en ce qu'**une évacuation d'air d'une électrovanne intégrée à la commande (3) va, par l'intermédiaire d'une canalisation (20), dans la au moins une chambre (9) antérieure ou dans l'une des chambres (10a à 10d) postérieures dans l'enveloppe (6) du silencieux.

11. Silencieux suivant l'une des revendications précédentes,
**caractérisé en ce que** l'enveloppe (6) du silencieux est enfermée dans une chemise (13) isolante du point de vue thermique.

12. Silencieux suivant l'une des revendications précédentes,
**caractérisé en ce que** l'ouverture (7) de sortie est décalée à angle droit par rapport à la direction d'afflux prescrite par l'ouverture (5) d'entrée de l'air comprimé dans l'enveloppe (6) du silencieux pour dévier l'air comprimé passant dans l'enveloppe (6) du silencieux.
